# EUROPÄISCHE PATENTSCHRIFT

(11) **EP 3 276 762 B1**
(45) Veröffentlichungstag und Bekanntmachung des Hinweises auf die Patenterteilung: **20.02.2019**
(21) Anmeldenummer: 17175603.4
(22) Anmeldetag: 13.06.2017
(51) Int. Cl.: H02B 1/052

(54) **BEFESTIGUNGSVORRICHTUNG FÜR EIN IN EINEM GEHÄUSE BEFINDLICHES ELEKTRISCHES BAUTEIL**
FASTENING DEVICE FOR AN ELECTRICAL COMPONENT IN A HOUSING
DISPOSITIF DE FIXATION POUR UN ÉLÉMENT ÉLECTRIQUE DISPOSÉ DANS UN BOÎTIER

(30) Priorität: 27.07.2016 DE 102016113813
(43) Veröffentlichungstag der Anmeldung: 31.01.2018
(73) Patentinhaber: DEHN + SÖHNE GMBH + CO KG, 92318 Neumarkt/Opf (DE)
(72) Erfinder: SCHRAFL, Julius Maria, 92318 Neumarkt (DE)
(74) Vertreter: Kruspig, Volkmar

(56) Entgegenhaltungen:
- EP-A1- 2 579 402
- WO-A1-2004/114466

## Beschreibung

Die Erfindung betrifft eine Befestigungsvorrichtung für ein in einem Gehäuse befindliches elektrisches Bauteil, insbesondere Überspannungsschutzgerät, auf einer Trag- oder Hutschiene mit einer Klemmeinrichtung, diese aufweisend einen fixen Greifhaken und einen beweglichen, zum fixen Greifhaken verlagerbaren Klemmschieber sowie einem Kraftumleitungsmechanismus zur Veränderung der relativen Position zwischen Greifhaken und Klemmschieber zwischen einer Offenstellung und einer Befestigungsstellung und mit einem Betätigungselement hierfür gemäß Anspruch 1.

Aus der DE 20 2004 019 381 U1 ist eine Vorrichtung zur Befestigung eines Gerätes an einer Tragschiene vorbekannt. Dem Gerät ist eine hakenförmige Halterung zum Übergreifen eines ersten Randes der Tragschiene sowie ein schwenkbarer Hebel zum Aufrasten hinter einem zweiten Rand der Tragschiene zugeordnet. Die Halterung und der Hebel sind am Gerätegehäuse aus Kunststoff einstückig angeformt. Bei einer Ausführungsform weist der Hebel eine Stirnfläche und eine gegenüber dieser vorspringende Nase auf, die einen zum Eindringen des zweiten Randes der Tragschiene ausreichenden Abstand zwischen der Stirnfläche des Hebels und einer am Gerätegehäuse ausgebildeten Anlagefläche aufrechterhält. Durch eine solche Maßnahme wird das Aufrasten des schwenkbaren Hebels hinter dem zweiten Rand der Tragschiene erleichtert.

Der Hebel kann einen biegsamen Bereich aufweisen, der beim Aufgleiten des Kopfes auf dem zweiten Rand der Tragschiene ein elastisches Ausweichen des Kopfes ermöglicht.

Damit die Rastverbindung des Standes der Technik auch unter beengten Raumverhältnissen leicht gelöst werden kann, ist die Schnappbefestigung dadurch weitergebildet, dass der Hebel einen Fuß aufweist, an dem sich ein entsprechend schlankes Werkzeug, vorzugsweise ein Schraubendreher, ansetzen lässt.

Aus der WO2004114466 A1 ist eine Vorrichtung zur Befestigung eines Gerätes an einer Tragschiene mit einem Spannkniehebel vorbekannt. Die DD 157132 A1 offenbart eine Vorrichtung zur Schnellbefestigung von elektrischen Schaltgeräten auf einer Tragschiene. Diesbezüglich soll der Montageablauf der Schnellbefestigungsvorrichtung durch konstruktive Änderungen des Schiebers und dessen Führung im Gehäuse- bzw. Sockelboden verbessert werden. Diesbezüglich weist der Klemmschieber in seinen hochgestellten Abwinkelungen Aussparungen auf, in welche ein Federelement in ungespanntem Zustand eingelegt wird. Das Federelement erhält durch das Einschieben des Klemmschiebers in die Gehäuseführung eine Vorspannung. Der Klemmschieber wird in dieser Lage durch eine am Klemmschieber angeformte, federnde Zunge gehalten, welche sich stirnseitig an der Gehäusewand abstützt.
Der Klemmschieber zur Schnellbefestigung von elektrischen Geräten nach DD 270186 A dient ebenfalls dem Fixieren von elektrischen Geräten im Sinne einer schraubenlosen Schnellmontage auf Tragschienen mit Hutprofil.
Im Sinne einer günstigen Fertigung bei geringem Materialeinsatz besteht der Klemmschieber aus einem U-Profil, dessen hochgestellte Schenkel mit Anlaufschrägen versehen sind. Die Schenkel sind in beide Richtungen als Anschläge ausgebildet und es weist der Klemmschieber ein gewölbtes Profil auf. Im Boden des Klemmschiebers ist eine Federführung angeordnet.
Die Befestigungsvorrichtung zum Befestigen eines Installationsgerätes an einer Tragschiene nach DE 10 2011 115 548 B4 umfasst ein Gehäuse mit einer daran ausgebildeten Halteklaue zum Umfassen eines ersten Schenkels der Tragschiene sowie einen Kipphebel, der eine Klemmklaue aufweist. Die Klemmklaue ist auf einer in das Gehäuse eingesetzten Achse schwenkbar gelagert. Weiterhin ist ein auf den Kipphebel wirkender Federmechanismus vorhanden, der den Kipphebel schwenkt und dessen Klemmklaue auf den zweiten Schenkel der Tragschiene drückt.

Ein in dem Gehäuse angeordneter Anschlag begrenzt die Schwenkbewegung des Kipphebels. Weiterhin ist eine verstellbare Arretiervorrichtung zur Herstellung eines Arretierzustandes vorhanden, bei welchem die Klemmklaue des Kipphebels gegen den zweiten Schenkel der Tragschiene gedrückt ist und ein Abschnitt des Kipphebels an den Anschlag gepresst wird. Der Kipphebel ist also grundsätzlich federbelastet.

Die Klemmvorrichtung zur lösbaren Befestigung eines Gerätegehäuses an einer Wand- oder Bodenfläche angebrachten Profilschiene mit Schienenhalter und Aufnahmebereich für eine Profilschiene nach DE 10 2013 103 544 A1 umfasst zwei Klemmelemente, wobei jeweils ein Klemmelement auf jeder Seite des Aufnahmebereiches angeordnet ist. Weiterhin sind Führungsmittel zur Führung der Klemmelemente gegenüber dem Schienenhalter vorhanden, wobei die Klemmelemente eine Klemmstellung, in der die Profilschiene zangenartig fixiert ist, und eine Öffnungsstellung, an der ein Lösen der Klemmvorrichtung von der Profilschiene möglich ist, einnehmen können. Weiterhin sind Spannmittel pro Klemmelement zur Ausübung einer Kraft auf das jeweilige Klemmelement vorhanden, um es in Richtung des Aufnahmebereiches gegen die Profilschiene zu drücken und in die Klemmstellung zu bringen. Ebenso ist ein Verbindungselement vorhanden, das die Klemmelemente verbindet, und zwar zur Ausübung einer Gegenkraft auf die Klemmelemente, die der durch die Spannmittel erzeugten Kraft entgegenwirkt, um die Klemmelemente von der Klemmstellung in die Öffnungsstellung zu bringen.

Das Öffnen und Schließen erfolgt durch eine Drehbewegung, welche mittels eines Keilschrägenpaares in eine Verschiebebewegung umgewandelt wird.

Aus der DE 20 2015 106 673 U1 ist ein anreihbares Bauelement mit einem für die Aufnahme eines elektrischen oder elektronischen Bauteiles vorgesehenen Gehäuse und mit einer Klemmeinrichtung für die Anbringung an einer Tragschiene vorbekannt.

Die Klemmeinrichtung weist zwei Rast-Greifhaken auf, die in zueinander entgegengesetzter Richtung zwischen einer Offenstellung und einer Befestigungsstellung verlagerbar sind.

Weiterhin ist ein Kraftumlenkungsmechanismus zur Verstellung der Rast-Greifhaken zwischen einer Offenstellung und einer Befestigungsstellung vorhanden. Der Kraftumlenkmechanismus ist mittels eines Betätigungselementes betätigbar, das von einer Außenseite mit einer Stellkraft beaufschlagt werden kann.

Die Rast-Greifhaken begrenzen einen freien Öffnungsabschnitt, der für die lösbare Befestigung an der Tragschiene in der Offenstellung größer und in der Befestigungsstellung geringer ist als eine vorgesehene Tragschiene in Erstreckung.

Der vorbekannte Kraftumlenkungsmechanismus besitzt ein betätigungselementseitiges Auslenkprofil und ein hakenseitiges Verlagerungsprofil, zwischen denen ein Gleitkontakt ausbildbar und das Verlagerungsteil dabei über das Auslenkprofil mit einer Verlagerungskraft beaufschlagbar ist. Zum Lösen der Verbindung zwischen Bauelement und Tragschiene ist ein seitliches Ziehen an entsprechend vorhandenen Betätigungselementen erforderlich. In einer Ausführungsform kommt eine Kulissenführung in Verbindung mit dem Betätigungselement in Betracht, wobei die Kulissenführung zwei Führungsbahnen mit einem gekrümmten Auslenkungsabschnitt und einem linearen Verriegelungsabschnitt besitzt.

Aus dem Vorgenannten ist es Aufgabe der Erfindung, eine weiterentwickelte Befestigungsvorrichtung für ein in einem Gehäuse befindliches elektronisches Bauteil, insbesondere ein Überspannungsschutzgerät, auf einer Trag- oder Hutschiene mittels einer Klemmeinrichtung anzugeben, wobei insbesondere bei angeschlossenen Leitern bezogen auf das elektronische Bauteil auftretende Kräfte aufgenommen und nicht in störender Weise auf die Hutschienenbefestigung einwirken, so dass unter allen Umständen ein definierter Zustand der Erdungskontaktfläche erhalten bleibt. Darüber hinaus soll die zu schaffende Befestigungsvorrichtung für den Einbau elektronischer Bauteile oder elektronischer Geräte geringer Breite geeignet sein. Trotz der geringen Breite eines entsprechenden Gerätes mit diesbezüglichem schmalen Gehäuse soll eine ausreichende blitzstromtragfähige Erdungskontaktausbildung möglich werden und es ist ein stabiler Sitz des entsprechenden Bauteiles auf der Trag- oder Hutschiene zu gewährleisten.

Letztendlich soll das Befestigen des Gerätes auf der Trag- oder Hutschiene aber auch ein Lösen von der Trag- oder Hutschiene, in einfacher und schneller Weise erfolgen können. Bei auf einer Trag- oder Hutschiene aneinander gereihten Bauteilen soll das Fixieren und Entnehmen der entsprechenden Bauteile nach oben störungsfrei erfolgen können.

Die Lösung der Aufgabe der Erfindung erfolgt durch eine Befestigungsvorrichtung gemäß der Merkmalskombination nach Patentanspruch 1, wobei die Unteransprüche mindestens zweckmäßige Ausgestaltungen und Weiterbildungen umfassen.

Es wird demnach von einer Befestigungsvorrichtung für ein in einem Gehäuse befindliches elektrisches Bauteil, insbesondere ein Überspannungsschutzgerät ausgegangen. Die Befestigungsvorrichtung ist so auszubilden, dass ein Fixieren des entsprechenden elektrischen Bauteils auf einer Trag- oder Hutschiene mittels Klemmeinrichtung möglich wird.

Die Klemmeinrichtung weist dabei einen fixen Greifhaken und einen beweglichen, zum fixen Greifhaken verlagerbaren Klemmschieber auf. Ebenso ist ein Kraftumleitungsmechanismus zur Veränderung der relativen Position zwischen Greifhaken und Klemmschieber zwischen einer Offenstellung und einer Befestigungsstellung vorhanden. Darüber hinaus ist ein Betätigungselement hierfür vorgesehen.

Mit Hilfe der Befestigungsvorrichtung soll nicht nur das entsprechende elektrische oder elektronische Bauteil auf der Trag- oder Hutschiene fixiert werden, sondern es soll darüber hinaus zur üblicherweise metallischen Hutschiene ein blitzstromtragfähiger Erdungskontakt herstellbar sein. Die Befestigungsvorrichtung ist insbesondere für solche elektronischen Bauteile oder Geräte geeignet, die eine geringe Breite, zum Beispiel 6 mm, besitzen.

Erfindungsgemäß ist der Greifhaken als im Gehäuse einleg- oder einsetzbares, leitfähiges metallisches Teil ausgebildet.

Der Greifhaken besitzt einen Kopfabschnitt, welcher im Befestigungszustand einen ersten Schenkelabschnitt der jeweiligen Trag- oder Hutschiene unter Bildung elektrischer Kontaktflächen mechanisch umfasst.

Diesbezüglich findet also ein ober- und unterseitiges mechanisches und elektrisches Kontaktieren des ersten Schenkelabschnittes der Trag- oder Hutschiene statt.

Der Klemmschieber ist im Gehäuse des elektrischen Bauteiles bzw. in dem Bauteil selbst, das ein separates Gehäuse aufweist, verschiebebeweglich gelagert.

Ein freies Ende des Schiebers untergreift im Befestigungszustand einen zweiten, dem ersten Schenkelabschnitt der Trag- oder Hutschiene gegenüberliegenden Abschnitt. Über eine Keilschräge übt der Klemmschieber eine Klemmkraft derart aus, dass eine feste und sichere mechanische und elektrische Verbindung zwischen dem elektrischen Bauteil und der Trag- oder Hutschiene erreichbar ist.

Im Klemmschieber ist ein Drehlager für einen Spannkniehebel vorgesehen, wobei ein erstes Ende des Spannkniehebels das Betätigungselement bildet und ein zweites, lagerseitiges Ende des Spannkniehebels an einem Festpunkt angreift. Bei entsprechender Bewegung des Spannkniehebels mittels des Betätigungselementes wird der Klemmschieber in Richtung Befestigungsstellung bewegt und kommt in Kontakt mit der Unterseite eines entsprechenden Abschnittes der Trag- oder Hutschiene.

Erfindungsgemäß ist der Festpunkt als Eingriff für das zweite Ende des Spannkniehebels in einem dem Kopfabschnitt des Greifhakens gegenüberliegenden Fußabschnitt ausgebildet. Hierbei kann es sich um eine Ausnehmung handeln, in die das zweite Ende des Spannkniehebels eingreift.

Im Bereich zwischen Kopfabschnitt und Fußabschnitt weist der Greifhaken Kröpfungen zur Ausbildung zusätzlicher Kontaktflächen bezogen auf die entsprechende Trag- oder Hutschiene und/oder zur Schaffung eines federelastischen Bereiches zum Ausgleich von Toleranzen der jeweiligen Trag- oder Hutschiene auf.

Das Betätigungselement ist von einer am Gehäuse des elektronischen Bauteils vorgesehenen Rastnase blockierbar.

Die Rastnase ist bevorzugt Bestandteil einer Entriegelung, welche eine aus dem Gehäuse herausragende Tastfläche besitzt.

Mit dem Betätigen des Spannkniehebels erfolgt in Verbindung mit der Rastnase eine akustische Rückmeldung bei erreichter Endlage, was heißt bei gegebener Befestigungsstellung. Diesbezüglich können die Oberflächen zwischen dem Betätigungselement und der Rastnase über eine Oberflächenstrukturierung verfügen, welche geräuscherzeugend wirkt.

Der Greifhaken ist bei einer bevorzugten Ausführungsform der Erfindung als Blech-, Stanz- und Biegeteil ausgeführt. Dieses Blech-, Stanz- und Biegeteil ist in einem Bodenabschnitt des Gehäuses bzw. des elektrischen Bauteiles eingesetzt, wobei diesbezüglich ein Rücksprung zur Trag- oder Hubschienenmontage vorhanden ist.

In einer Weiterbildung der Erfindung kann das Betätigungselement eine Aussparung oder eine Kerbe zum Ansatz eines Betätigungsmittels, insbesondere eines Werkzeuges, besitzen.

Der Kraftumleitungsmechanismus umfasst den Spannkniehebel mit Festpunkt sowie den in der Führung verschiebebeweglich gelagerten Klemmschieber, wobei die Schwenkbewegung über das Betätigungselement in eine Verschiebebewegung des Klemmschiebers umgewandelt wird. Mit Hilfe des Spannkniehebels lassen sich sehr große Kräfte auf den Klemmschieber und damit auf die diesbezüglichen Elemente der Befestigungsvorrichtung ausüben, und zwar bedingt durch das Verhältnis der Hebellängen zueinander in Verbindung mit der Ausbildung des bereits erwähnten Drehlagers.

Die Erfindung soll nachstehend anhand eines Ausführungsbeispieles sowie unter Zuhilfenahme von Figuren näher erläutert werden.

Hierbei zeigen:
- Fig. 1: eine teilweggebrochene perspektivische Darstellung einer Befestigungsvorrichtung für ein elektronisches Bauteil auf einer Trag- oder Hutschiene im fixierten, das heißt gespannten und geschlossenen Zustand;
- Fig. 2: eine Darstellung ähnlich derjenigen nach Fig. 1, jedoch im Öffnungszustand, in welchem das entsprechende elektronische Bauteil von der Trag- oder Hutschiene entnommen werden kann;
- Fig. 3: eine seitliche Schnittdarstellung durch die Befestigungsvorrichtung mit Erläuterung der Hebelverhältnisse des Spannkniehebels mit erstem und zweitem Hebel im gespannten bzw. geschlossen Zustand;
- Fig. 4: eine Darstellung ähnlich derjenigen nach Fig. 3, jedoch im geöffneten Zustand mit der Möglichkeit der Entnahme bzw. des Entfernens des jeweiligen elektronischen Bauteils von der Trag- oder Hutschiene.

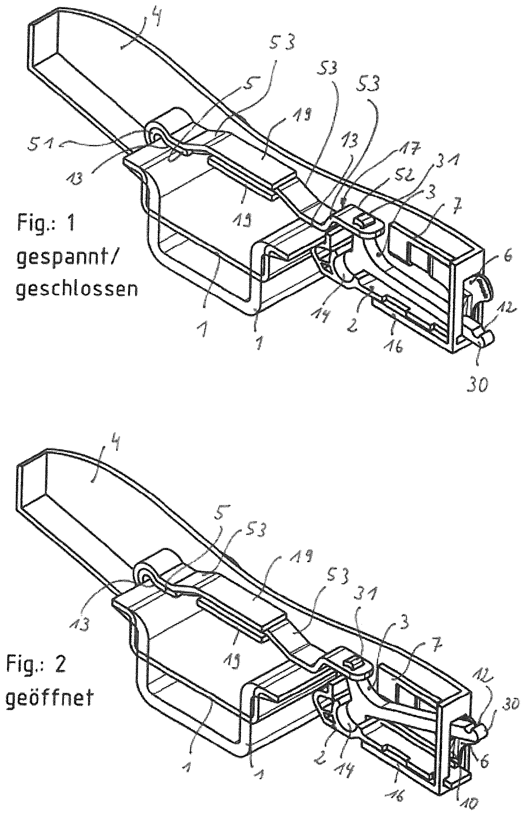

Bei den Darstellungen nach den Fig. 1 bis 4 wird von einer Befestigungsvorrichtung für ein in einem Gehäuse 4 befindlichen elektronischen Bauteil (nicht gezeigt) ausgegangen. Hierbei kann es sich insbesondere um ein Überspannungsschutzgerät handeln.

Die Befestigung soll auf einer Trag- oder Hutschiene 1 erfolgen. Die verschiedenen Arten der Hutschienen sind symbolisch in den Fig. 1 bis 4 gezeigt.

Die Befestigungsvorrichtung umfasst weiterhin einen Klemmschieber 2 als dem eigentlichen Betätigungselement.

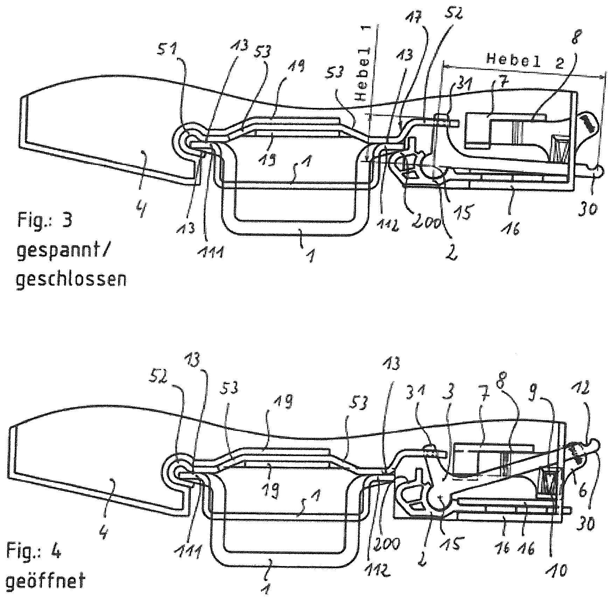

Dieser Klemmschieber 2 ist über Flächen 11 im Gehäuse 4 gelagert. Der Klemmschieber 2 kann sich bezogen auf die Darstellung in den Fig. 3 und 4 nach links und rechts in der Zeichenebene bewegen.

Die Bewegung des Klemmschiebers 2 erfolgt mit Hilfe eines Spannkniehebels 3.

Wird der Spannkniehebel 3 im Uhrzeigersinn bewegt, bewegt sich der Klemmschieber 2 nach links und verriegelt die Vorrichtung.

Wird der Spannkniehebel 3 gegen den Uhrzeigersinn bewegt, findet eine Verschiebebewegung des Klemmschiebers 2 nach rechts statt. In diesem Falle wird die Hutschiene 1 freigegeben.

Der Spannkniehebel lässt sehr große Kräfte auf den Klemmschieber 2 einwirken, welches bedingt ist durch die Längen der Hebel gemäß der Darstellung nach Fig. 3 (Verhältnis Hebel 1 zu Hebel 2).

Ein weiteres erfindungswesentliches Element ist der im Gehäuse 4 eingelegte oder eingebrachte Greifhaken 5.

Der Greifhaken 5 ist bevorzugt als Blech-, Stanz- und Biegeteil, das heißt als leitfähiges metallisches Teil ausgeführt.

Der Greifhaken 5 weist einen Kopfabschnitt 51 auf, welcher im Befestigungszustand einen ersten Schenkelabschnitt 111 der Trag- oder Hutschiene 1 unter Bildung elektrischer Kontaktflächen 13 mechanisch umfasst.

Der Greifhaken 5 weist weiterhin einen dem Kopfabschnitt 51 gegenüberliegenden Fußabschnitt 52 auf.

Zwischen Kopfabschnitt 51 und Fußabschnitt 52 des Greifhakens 5 sind Kröpfungen 53 zur Ausbildung zusätzlicher Kontaktflächen 13 sowie zur Schaffung eines federelastischen Bereiches 17 zum Ausgleichen von Toleranzen der jeweiligen Trag- oder Hutschiene 1 vorhanden.

Der Klemmschieber 2 ist im Gehäuse 4 mit Hilfe von Führungen 11 verschiebebeweglich gelagert. Aus den Fig. 1 und 3 ist ersichtlich, dass der Klemmschieber 2 im Befestigungszustand einen zweiten, dem ersten Schenkelabschnitt 111 der Trag- oder Hutschiene 1 gegenüberliegenden Abschnitt 112 untergreift und über eine Keilschräge 200 eine Klemmkraft ausübt.

Im Klemmschieber 2 ist ein Drehlager mit Drehpunkt 15 für den Spannkniehebel 3 vorgesehen, wobei ein erstes Ende des Spannkniehebels 3 das Betätigungselement 30 bildet. Ein zweites Ende 31 des Spannkniehebels 3 greift an einem Festpunkt an, der als Aussparung im Fußabschnitt 52 realisiert ist.

Das Betätigungselement 30 ist von einer am Gehäuse 4 vorgesehenen Rastnase 9; 10 blockierbar.

Die Rastnase 9; 10 ist Bestandteil einer Entriegelung, welche eine aus dem Gehäuse herausreichende Tastfläche 18 besitzt.

Die Entriegelung mit Tastfläche 18 ist im Sinne eines Schnappbleches 6 zu verstehen, wobei in dem Fall, wenn sich der Spannkniehebel 3 über die Kante 10 bewegt und einschnappt, ein akustisches Signal wahrnehmbar ist. Eine Kante 8 des Steges 7 dient dem Zweck, dass sich das Schnappblech 6 am Gehäuse 4 abstützen kann.

Am Betätigungselement 30 ist in einer Ausführungsform eine Aussparung 12 oder entsprechende Kerbe zum Ansatz eines Betätigungsmittels, insbesondere eines Werkzeugs vorhanden. Die Aussparung an der Kerbe 12 dient aber auch der leichteren Betätigung, wenn diese mit dem Finger einer menschlichen Hand erfolgen soll.

Eine Ausformung im Klemmschieber dient als Lagerschale 14 für den Spannkniehebel 3.

Die erwähnte Führung des Klemmschiebers 2 erfolgt über die diesbezüglichen Flächen des Klemmschiebers in Verbindung mit den Führungsstegen 16 im Gehäuse 4.

Die geschilderte Lösung gemäß Ausführungsbeispiel ermöglicht bei angeschlossenen starren Leitern die Aufnahme entsprechender Kräfte und Momente auf die Hutschienenbefestigung ohne nachteiligen Einfluss auf die diesbezüglichen elektrischen Kontaktflächen, insbesondere dem gewünschten Erdungskontakt. Der Greifhaken kann als einfaches metallisches Stanz- und Biegeteil ausgeführt werden, das befestigungsseitig in die Hutschiene eingehängt wird und über einen Hebel in Verbindung mit einem Klemmschieber verspannt werden kann. Für eine intuitive Bedienung ist eine Verrastung mit akustischer Rückmeldung realisiert, wobei diese Rückmeldung mit Erreichen einer Endstellung bzw. einer gespannten Stellung erfolgt.

## Patentansprüche

1. Befestigungsvorrichtung für ein in einem Gehäuse (4) befindliches elektrisches Bauteil, insbesondere Überspannungsschutzgerät, auf einer Trag- oder Hutschiene (1) mit einer Klemmeinrichtung, diese aufweisend einen fixen Greifhaken (5) und einen beweglichen, zum fixen Greifhaken (5) verlagerbaren Klemmschieber (2) sowie einen Kraftumleitungsmechanismus zur Veränderung der relativen Position zwischen Greifhaken (5) und Klemmschieber (2) zwischen einer Offenstellung und einer Befestigungsstellung und mit einem Betätigungselement (30) hierfür,
**dadurch gekennzeichnet, dass**
der Greifhaken (5) als im Gehäuse (4) einleg- oder einsetzbares leitfähiges metallisches Teil ausgebildet ist, wobei der Greifhaken (5) einen Kopfabschnitt (51) besitzt, welcher im Befestigungszustand einen ersten Schenkelabschnitt (111) der Trag- oder Hutschiene (1) unter Bildung elektrischer Kontaktflächen (13) mechanisch umfasst,
der Klemmschieber (2) im Gehäuse (4) mittels Führung (16) verschiebebeweglich gelagert ist und ein freies Ende des Schiebers (2) im Befestigungszustand einen zweiten, dem ersten Schenkelabschnitt (111) der Trag- oder Hutschiene (1) gegenüberliegenden Abschnitt (112) untergreift und über eine Keilschräge (200) eine Klemmkraft ausübt, im Klemmschieber (2) einen Drehlager (14; 15) für einen Spannkniehebel (3) vorgesehen ist, wobei ein erstes Ende des Spannkniehebels (3) das Betätigungselement (30) bildet und ein zweites, lagerseitiges Ende (31) des Spannkniehebels (3) an einem Festpunkt angreift.

2. Befestigungsvorrichtung nach Anspruch 1,
**dadurch gekennzeichnet, dass**
der Festpunkt als Eingriff für das zweite Ende (31) des Spannkniehebels (3) in einem den Kopfabschnitt (51) des Greifhakens (5) gegenüberliegenden Fußabschnitt (52) ausgebildet ist.

3. Befestigungsvorrichtung nach Anspruch 2,
**dadurch gekennzeichnet, dass**
im Bereich zwischen Kopfabschnitt (51) und Fußabschnitt (52) der Greifhaken (5) Kröpfungen (53) zur Ausbildung zusätzlicher Kontaktflächen (13) und/oder zur Schaffung eines federelastischen Bereiches (17) zum Ausgleich von Toleranzen der jeweiligen Trag- oder Hutschiene (1) aufweist.

4. Befestigungsvorrichtung nach einem der vorangegangenen Ansprüche,
**dadurch gekennzeichnet, dass**
das Betätigungselement (30) von einer am Gehäuse (4) vorgesehenen Rastnase (9; 10) blockierbar ist.

5. Befestigungsvorrichtung nach Anspruch 4,
**dadurch gekennzeichnet, dass**
die Rastnase (9; 10) Bestandteil einer Entriegelung ist, welche eine aus dem Gehäuse (4) herausreichende Tastfläche (18) besitzt.

6. Befestigungsvorrichtung nach Anspruch 4 oder 5,
**dadurch gekennzeichnet, dass**
mit dem Betätigen des Spannkniehebels (3) in Verbindung mit der Rastnase (9; 10) eine akustische Rückmeldung bei erreichter Endlage erfolgt.

7. Befestigungsvorrichtung nach einem der vorangegangenen Ansprüche,
**dadurch gekennzeichnet, dass**
der Greifhaken (5) als Blech-, Stanz- und Biegeteil ausgeführt und in einem Bodenabschnitt des Gehäuses (4) eingesetzt ist, welcher einen Rücksprung zur Trag- oder Hutschienenmontage (1) besitzt.

8. Befestigungsvorrichtung nach einem der vorangegangenen Ansprüche,
**dadurch gekennzeichnet, dass**
am Betätigungselement (30) eine Aussparung (12) oder Kerbe zum Ansatz eines Betätigungsmittels, insbesondere eines Werkzeuges vorgesehen ist.

9. Befestigungsvorrichtung nach einem der vorangegangenen Ansprüche,
**dadurch gekennzeichnet, dass**
der Kraftumleitungsmechanismus den Spannkniehebel (3) mit Festpunkt sowie den in der Führung beweglich gelagerten Klemmschieber (2) umfasst, wobei die Schwenkbewegung über das Betätigungselement (30) in eine Verschiebebewegung des Klemmschiebers (2) umgewandelt wird.

## Claims

1. A fastening device for an electrical component situated in a housing (4), in particular an overvoltage protection device, on a mounting rail or top-hat rail (1) having a clamping means comprising a fixed gripper hook (5) and a movable clamping slider (2) which is displaceable towards the fixed gripper hook (5), as well as a force redirecting mechanism for changing the relative position between the gripper hook (5) and the clamping slider (2) between an open position and a fastening position, and having an actuating element (30) therefore,
**characterized in that**
the gripper hook (5) is formed as a conductive metallic part which can be put or inserted into the housing (4), wherein the gripper hook (5) has a head portion (51) which, in the fastening state, mechanically encompasses a first leg portion (111) of the mounting rail or top-hat rail (1) while forming electrical contact surfaces (13),
the clamping slider (2) is mounted in the housing (4) by means of a guide (16) so as to be movable in displacement, and a free end of the slider (2), in the fastening state, grips a second portion (112) opposite the first leg portion (111) of the mounting rail or top-hat rail (1) from below and exerts a clamping force via a wedge inclination (200), a pivot bearing (14; 15) for a tightening toggle lever (3) is provided in the clamping slider (2), wherein a first end of the tightening toggle lever (3) forms the actuating element (30) and engages a second end (31) of the tightening toggle lever (3), which end is on the bearing side, at a fixed point.

2. The fastening device according to claim 1,
**characterized in that**
the fixed point is formed as an engagement point for the second end (31) of the tightening toggle lever (3) in a foot portion (52) opposite the head portion (51) of the gripper hook (5).

3. The fastening device according to claim 2,
**characterized in that**
in the area between the head portion (51) and the foot portion (52), the gripper hook (5) comprises cranks (53) for forming additional contact surfaces (13) and/or for creating a resilient area (17) for compensating tolerances of the respective mounting rail or top-hat rail (1).

4. The fastening device according to anyone of the preceding claims,
**characterized in that**
the actuating element (30) can be blocked by a locking catch (9; 10) provided on the housing (4).

5. The fastening device according to claim 4,
**characterized in that**
the locking catch (9; 10) is an integral part of an unlocking device which has a touch surface (18) protruding out from the housing (4).

6. The fastening device according to claim 4 or 5,
**characterized in that**
together with the actuation of the tightening toggle lever (3) in conjunction with the locking catch (9; 10), an acoustic feedback takes place when the end position is reached.

7. The fastening device according to anyone of the preceding claims,
**characterized in that**
the gripper hook (5) is realized as a sheet metal, stamped and bending part and is inserted in a bottom portion of the housing (4) which bottom portion has a setback for the assembly of the mounting rail or top-hat rail (1).

8. The fastening device according to anyone of the preceding claims,
**characterized in that**
a recess (12) or notch for applying an actuating means, in particular a tool, is provided on the actuating element (30).

9. The fastening device according to anyone of the preceding claims,
**characterized in that**
the force redirecting mechanism comprises the tightening toggle lever (3) with the fixed point as well as the clamping slider (2) mounted to be movable in the guide, wherein the pivot movement, via the actuating element (30), is converted into a displacement movement of the clamping slider (2).

## Revendications

1. Dispositif de fixation pour un composant électrique situé dans un boîtier (4), en particulier pour un appareil de protection anti-surtension, sur un rail de support ou rail oméga (1) pourvu d'un moyen de serrage, celui-ci comprenant un crochet de préhension (5) fixe et un poussoir de serrage (2) mobile par rapport au crochet de préhension (5) fixe, ainsi qu'un mécanisme de déviation de force pour modifier la position relative entre le crochet de préhension (5) et le poussoir de serrage (2) entre une position ouverte et une position de fixation, et comprenant un élément d'actionnement (30) à cet effet,
**caractérisé en ce que**
le crochet de préhension (5) est réalisé sous la forme d'une pièce métallique conductrice susceptible d'être posée ou insérée dans le boîtier (4), le crochet de préhension (5) possédant une portion de tête (51) qui, dans l'état fixé, entoure mécaniquement une première portion de branche (111) du rail de support ou rail oméga (1) en formant des surfaces de contact électriques (13),
le poussoir de serrage (2) est monté mobile en translation au moyen d'un guidage (16) dans le boîtier (4) et une extrémité libre du poussoir (2) vient engager par le dessous, dans l'état fixé, une seconde portion (112) opposée à la première portion de branche (111) du rail de support ou rai l oméga (1), et exerce une force de serrage par l'intermédiaire d'un chanfrein (200),
un palier de rotation (14 ; 15) pour un levier à genouillère de serrage (3) est prévu dans le poussoir de serrage,
une première extrémité du levier à genouillère de serrage (3) forme l'élément d'actionnement (30), et
une seconde extrémité (31) côté palier du levier à genouillère de serrage (3) vient attaquer un point fixe.

2. Dispositif de fixation selon la revendication 1,
**caractérisé en ce que**
le point fixe est réalisé sous forme de moyen d'engagement pour la seconde extrémité (31) du levier à genouillère de serrage (3) dans une portion de pied (52) opposée à la portion de tête (51) du crochet de préhension (5).

3. Dispositif de fixation selon la revendication 2,
**caractérisé en ce que**
dans la zone entre la portion de tête (51) et la portion de pied (52), le crochet de préhension (5) présente des coudages (53) pour réaliser des surfaces de contact supplémentaires (13) et/ou pour créer une zone élastique (17) pour compenser des tolérances du rail de support ou rail oméga (1) respectif.

4. Dispositif de fixation selon l'une des revendications précédentes,
**caractérisé en ce que**
l'élément d'actionnement (30) est susceptible d'être bloqué par un bec d'enclenchement (9, 10) prévu sur le boîtier (4).

5. Dispositif de fixation selon la revendication 4,
**caractérisé en ce que**
le bec d'enclenchement (9 ; 10) fait partie d'un moyen de déverrouillage qui possède une surface à toucher (18) dépassant hors du boîtier (4).

6. Dispositif de fixation selon la revendication 4 ou 5,
**caractérisé en ce que**
par actionnement du levier à genouillère de serrage (3) en coopération avec le bec d'enclenchement (9 ; 10), il se produit un avertissement acoustique lorsque la position de fin de course est atteinte.

7. Dispositif de fixation selon l'une des revendications précédentes,
**caractérisé en ce que**
le crochet de préhension (5) est réalisé sous forme de pièce en tôle, poinçonnée et cintrée et est mis en place dans une portion de fond du boîtier (4), qui possède un retrait pour le montage du rail de support ou rail oméga (1).

8. Dispositif de fixation selon l'une des revendications précédentes,
**caractérisé en ce que**
une échancrure (12) ou une entaille destinée à appliquer un moyen d'actionnement, en particulier un outil, est prévue sur l'élément d'actionnement (30).

9. Dispositif de fixation selon l'une des revendications précédentes,
**caractérisé en ce que**
le mécanisme de déviation de force entoure le levier à genouillère de serrage (3) à point fixe ainsi que le poussoir de serrage (2) monté mobile dans le guidage, le mouvement de basculement étant converti en un mouvement de translation du poussoir de serrage (2) via l'élément d'actionnement (30).
